# EUROPEAN PATENT SPECIFICATION

(11) **EP 2 826 907 B1**
(45) Date of publication and mention of the grant of the patent: **04.05.2016**
(21) Application number: 14154084.9
(22) Date of filing: 06.02.2014
(51) Int. Cl.: D06F 37/22, D06F 37/26

(54) **Clothes treating apparatus**
Vorrichtung zur Behandlung von Kleidungsstücken
Appareil de traitement de vêtements

(30) Priority: 16.07.2013 KR 20130083723
(43) Date of publication of application: 21.01.2015
(73) Proprietor: LG Electronics Inc., Seoul 150-721 (KR)
(72) Inventor: Kim, Jinwoong, 153-802 Seoul (KR); Kim, Hyundong, 153-802 Seoul (KR); Kim, Kyeonghwan, 153-802 Seoul (KR); Seo, Hyunseok, 153-802 Seoul (KR)
(74) Representative: Ter Meer Steinmeister & Partner

(56) References cited:
- WO-A2-2010/077056
- DE-A1- 2 527 185
- DE-A1- 3 427 839
- US-A1- 2012 006 067

## Description

### BACKGROUND OF THE DISCLOSURE

### 1. Field of the Disclosure

This specification relates to a vibration reducing device for a clothes treating apparatus, and particularly, to a clothes treating apparatus, capable of reducing (buffering) vibration of a drum rotatably disposed in a tub fixed to a cabinet.

### 2. Background of the Disclosure

In general, clothes treating apparatuses, such as washing machines, washing machines with a drying function or drying machines, may include a drum in which laundry (clothes) is introduced. The washing machine may further include a tub for storing washing water. The drum may be rotatably installed within the tub.

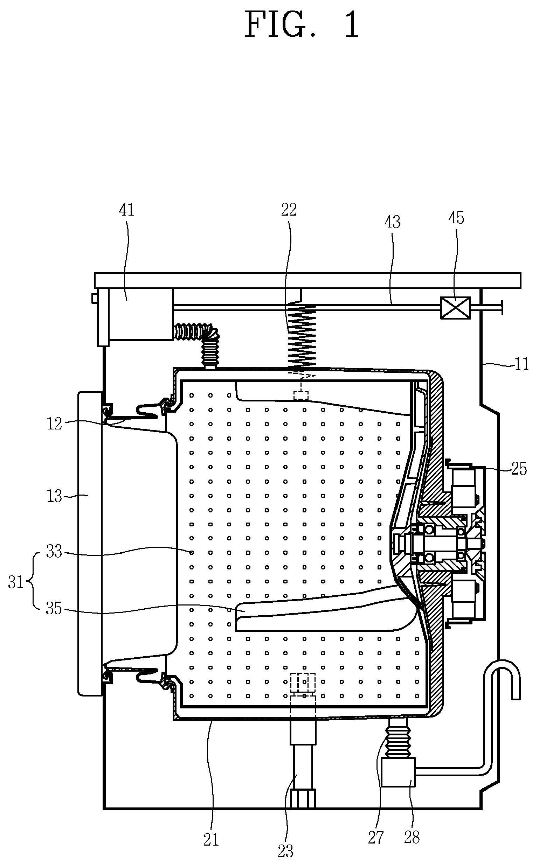

FIG. 1 is a sectional view of a washing machine, as an exemplary clothes treating apparatus according to the related art. As illustrated in FIG. 1, the washing machine may include a cabinet 11, a tub 21 received within the cabinet 11, and a drum 31 rotatably installed within the tub 21.

An opening 12 and a door 13, through which the clothes is introduced and drawn out may be formed on a front surface of the cabinet 11. The tub 21 may be supported within the cabinet 11 by use of a spring 22 and a damper 23. The tub 21 may have a cylindrical shape with one side open, and the drum 31 may be rotatably installed within the tub 21.

The drum 31 may have a cylindrical shape with a front side open. The drum 31 may include a plurality of through holes 33 along a circumferential surface. A plurality of lifts 35 for lifting the clothes may be installed on an inner surface of the drum 31.

Meanwhile, a driving motor 25 for rotating the drum 31 may be coupled to a rear portion of the tub 21. A drain passage 27 having a drain pump 28 may be disposed below the drum 31 to discharge water therethrough.

A detergent injector 41 for supplying the detergent may be disposed above the tub 21. A water supply pipe 43 may be connected to the detergent injector 41. A water supply valve 45 may be disposed on the water supply pipe 43.

With the configuration of the related clothes treating apparatus, vibration which is generated due to rotation of the drum by the driving motor may be transferred to the tub. Accordingly, the spring 22 and the damper 23 for absorbing the vibration of the tub may be provided. Also, a separate buffering member for absorbing the vibration of the drum may additionally be required. By connecting the buffering member to the drum or the tub, the drum or the tube may be relatively limited in size due to a great installation space for the buffering member.

US 2012/006067 A1 describes a laundry machine. The overall weight of the vibrating system provided in the laundry machine is reduced and the vibration of the drum is stabilized by new means for adding weights. In addition, the front of the drum may be prevented from falling downward because of the introduction of laundry.

DE 34 27 839 A1 describes a washing machine having springs between the upper side of the tub and the upper cabinet and lower dampers being inclined inwardly due to a limited space of the cabinet at the lower surface of the cabinet to allow to integrate the washing machine into a kitchen. It has damping only in vertical direction.

### SUMMARY OF THE DISCLOSURE

Therefore, an aspect of the detailed description is to provide a clothes treating apparatus, which does not require a buffering member installed in a tub for reducing vibration, by virtue of preventing vibration generated in a driving unit and a drum from being transferred to the tub.

Another aspect of the detailed description is to provide a clothes treating apparatus, capable of reducing a fabricating cost and facilitating maintenance by simplifying a structure of a buffering member for reducing vibration with equally maintaining an effect of reducing vibration.

The object is solved by the features of the independent claims. Preferred embodiments are given in the depedent claims.

Preferably there is provided a clothes treating apparatus including a cabinet, a tub fixed to the cabinet and having a front portion communicating with an outer side of the cabinet, a drum received in the tub and rotatably connected to a rear portion of the tub, a driving unit having a bearing housing for rotatably supporting a rotation shaft connected to the drum and a driving motor for rotating the rotation shaft, a rear gasket configured to seal a rear portion of the tub to prevent a leakage of water from the tub to the driving unit and having flexibility for the driving unit to be relatively movable with respect to the tub, supporting members connected to the bearing housing and extending between a lower surface of the cabinet and the tub from a rear side of the tub, and a plurality of dampers installed between the supporting members and the lower surface of the cabinet.

The plurality of dampers include first dampers inwardly extending from a front portion of the supporting members toward the lower surface of the cabinet, and second dampers downwardly extending from the supporting members toward the rear side of the cabinet.

The first damper may have a damping force weaker than that of the second damper.

An angle from the first damper to the lower surface of the cabinet may be the same as an angle from the second damper to the lower surface of the cabinet. In accordance with an embodiment of the present invention, the supporting members include first brackets extending from the bearing housing toward the lower surface of the cabinet, and second brackets extending from the first brackets toward the front side of the cabinet. The first dampers inwardly extend from a front portion of the first brackets toward the lower surface of the cabinet, and the second dampers are disposed between the first dampers and a rear surface of the cabinet and downwardly extend from the second brackets toward the rear side of the cabinet.

The first and second brackets may include supporting walls formed on edges thereof in a press-molding manner. Also, at least one of the first and second brackets may include at least one bead extending along the extending direction of the bracket in a convex form.

The apparatus may further include weights mounted to at least one of the first brackets and the second brackets.

The apparatus further includes a pair of elastic members configured to support both end portions of the second brackets with respect to the lower surface of the cabinet.

The tub may include a tub back defining a rear surface thereof and secured with the bearing housing, and the rear gasket may hermetically seal a gap between the tub back and the rear portion of the tub.

In accordance with another exemplary embodiment, the plurality of dampers may further include third dampers extending from the rear portion of the supporting members toward the lower surface of the cabinet. Here, the third damper may extend from the first brackets.

The third damper may have a damping force weaker than that of the second damper.

The first damper and the third damper may have the same damping force.

An angle from the third damper to the lower surface of the cabinet may be greater than an angle from the first damper or the second damper to the lower surface of the cabinet.

At least one of the plurality of dampers may be installed adjacent to the elastic member.

In accordance with one exemplary embodiment, by preventing vibration from being transferred from a drum to a tub, the vibration of the tub may be reduced. This may not require for an interval which has been maintained to reduce the vibration of the tub. Consequently, an outer surface of the tub may be located close to a cabinet, which may result in implementing a clothes treating apparatus with a larger capacity in the same size of cabinet.

Also, in accordance with one exemplary embodiment, dampers and springs with a simplified structure may be used to reduce the vibration of the drum, which may allow for reduction of fabricating costs and facilitation of maintenance.

Further scope of applicability of the present application will become more apparent from the detailed description given hereinafter. However, it should be understood that the detailed description and specific examples, while indicating preferred embodiments of the disclosure, are given by way of illustration only, since various changes and modifications within the scope of the disclosure will become apparent to those skilled in the art from the detailed description.

### BRIEF DESCRIPTION OF THE DRAWINGS

The accompanying drawings, which are included to provide a further understanding of the disclosure and are incorporated in and constitute a part of this specification, illustrate exemplary embodiments and together with the description serve to explain the principles of the disclosure.

In the drawings:
FIG. 1 is a lateral sectional view illustrating a schematic configuration of a washing machine according to the related art;
FIG. 2 is a lateral sectional view partially illustrating a clothes treating apparatus in accordance with one exemplary embodiment;
FIG. 3 is a perspective view illustrating a tub and a rear gasket of the exemplary embodiment of FIG. 2;
FIG. 4 is a perspective view illustrating that a bearing housing coupled with a tub back is installed on a lower surface of a cabinet by supporting members, a plurality of dampers and elastic members in the exemplary embodiment of FIG. 2;
FIG. 5 is a perspective view of the supporting member in the exemplary embodiment of FIG. 2;
FIG. 6 is a lateral sectional view taken along the line I-I of FIG. 4;
FIG. 7 is a lateral sectional view taken along the line II-II of FIG. 4; and
FIG. 8 is a lateral sectional view illustrating that a first bracket is connected to a weight and a cabinet in accordance with another exemplary embodiment.

### DETAILED DESCRIPTION OF THE DISCLOSURE

Hereinafter, preferred embodiments of the present invention will be described in detail with reference to the accompanying drawings. In describing the present invention, moreover, the detailed description will be omitted when a specific description for publicly known technologies to which the invention pertains is judged to obscure the gist of the present invention.

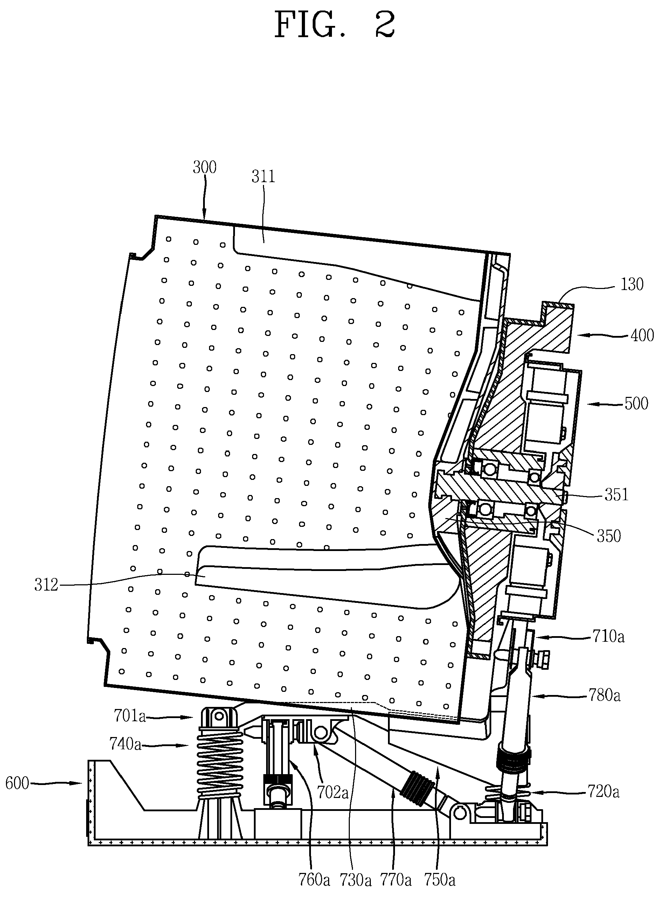

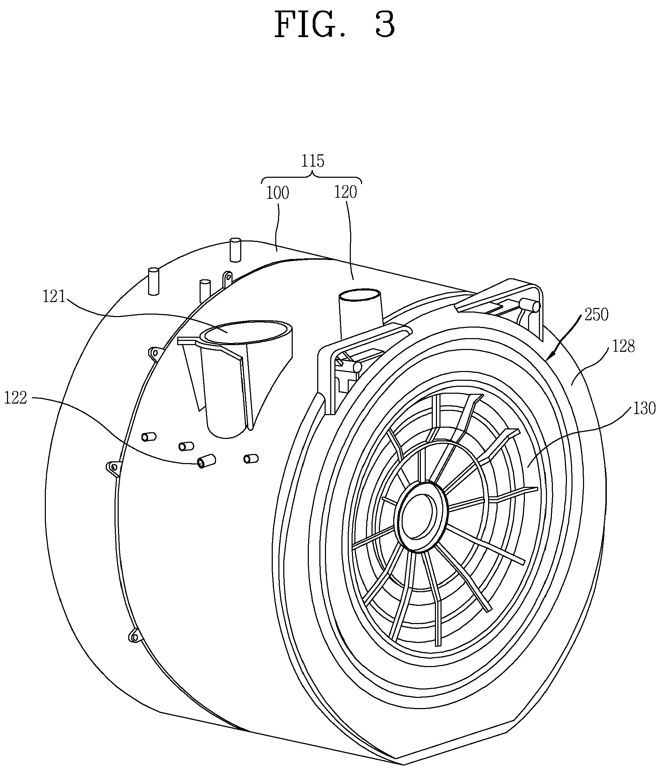

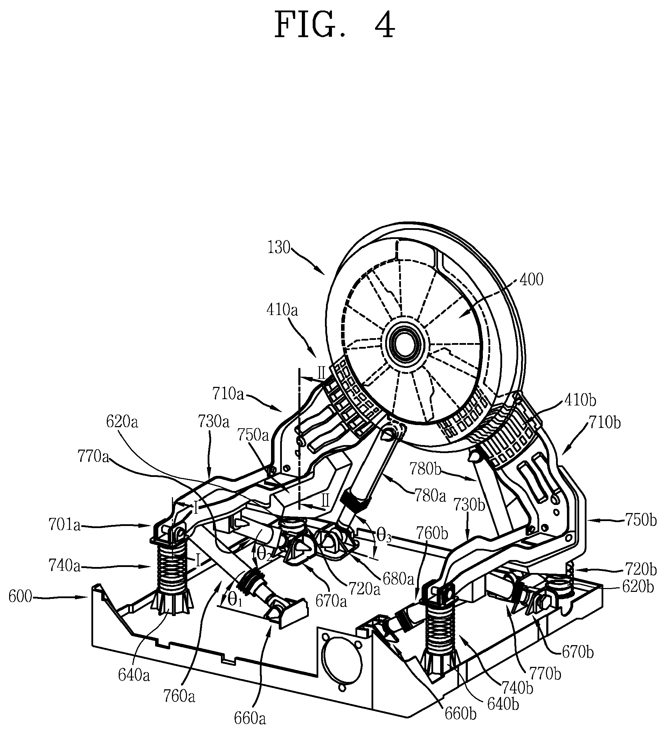

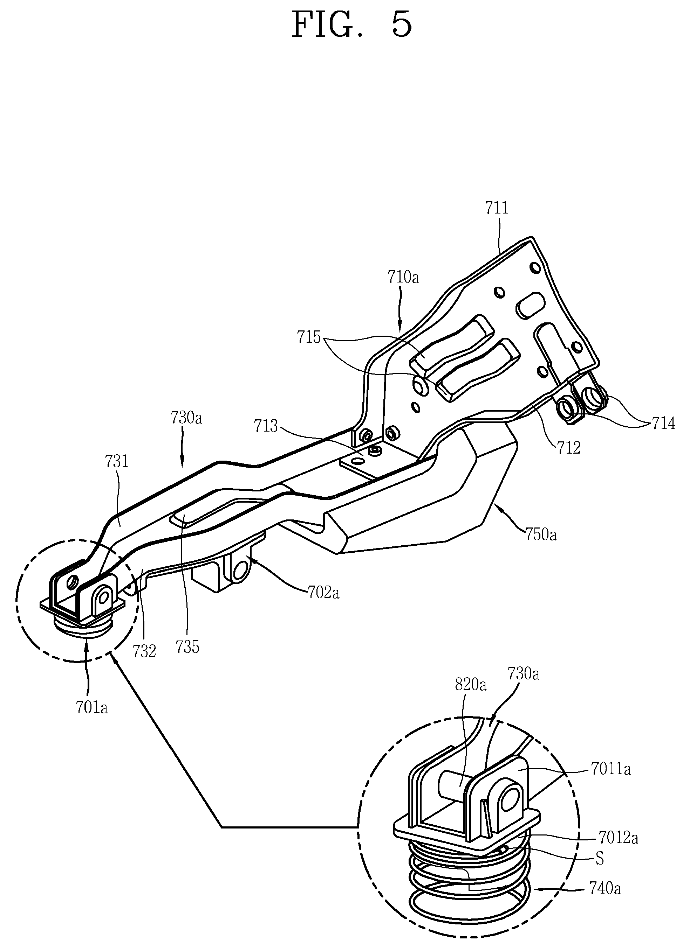

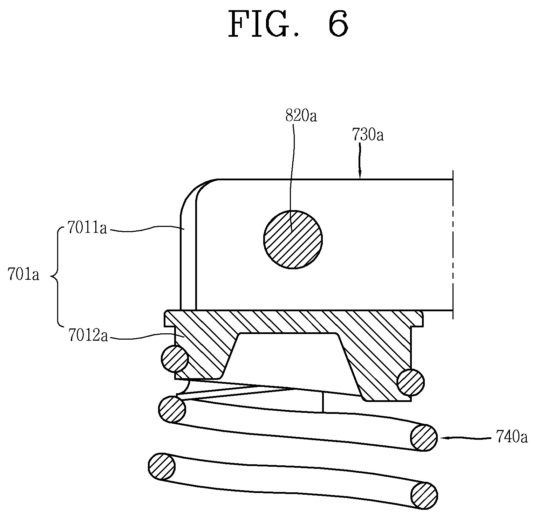

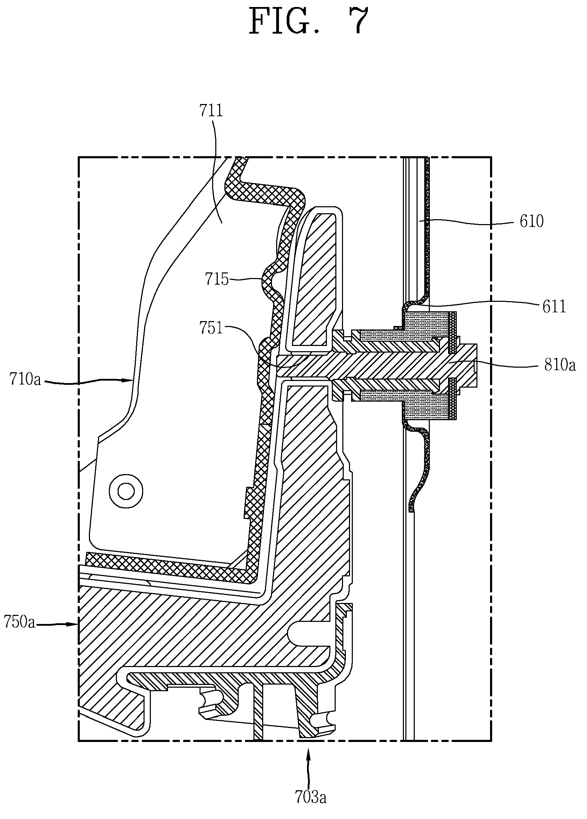

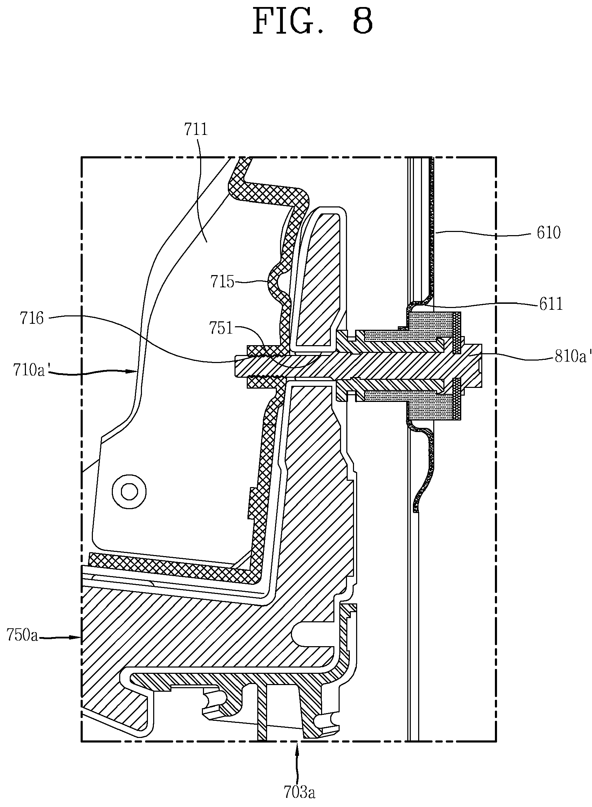

FIG. 2 is a lateral sectional view partially illustrating a clothes treating apparatus in accordance with one exemplary embodiment, FIG. 3 is a perspective view illustrating a tub and a rear gasket of the exemplary embodiment of FIG. 2, FIG. 4 is a perspective view illustrating that a bearing housing coupled with a tub back is installed on a lower surface of a cabinet by supporting members, a plurality of dampers and elastic members in the exemplary embodiment of FIG. 2, FIG. 5 is a perspective view of the supporting member in the exemplary embodiment of FIG. 2, FIG. 6 is a lateral sectional view taken along the line I-I of FIG. 4, FIG. 7 is a lateral sectional view taken along the line II-II of FIG. 4, and FIG. 8 is a lateral sectional view illustrating that a first bracket is connected to a weight and a cabinet in accordance with another exemplary embodiment.

The exemplary embodiment illustrated in FIGS. 2 to 8 is a washing machine with a drying function, but the present disclosure may not be limited to this type. The present disclosure may also be applied to a clothes treating apparatus, for example, a drying machine or a washing machine, in which vibration is generated while a drum is rotated.

Hereinafter, description will be given in detail of exemplary embodiments of a clothes treating apparatus according to the present disclosure, with reference to FIGS. 2 to 8.

A washing machine, which is a clothes treating apparatus according to one exemplary embodiment of the present disclosure, may include a tub 115 fixedly supported on a cabinet. The tub 115 is a space which has an introduction opening at the front thereof for allowing clothes to be introduced and drawn out therethrough and stores washing water upon washing the clothes. The tub 115 may include a front part 100 forming a front portion of the tub 115 and a rear part 120 forming a rear portion of the tub 115.

The front part 100 and the rear part 120 may be coupled to each other by screws, and define therein a space for accommodating a drum 300. The rear part 120 may be formed in a cylindrical shape to surround the drum 300. The rear part 120 may have a front side open and have a rear surface 128 in a shape of a donut (or ring). The front side of the rear part 120 may be coupled to the front part 100 in a sealing manner.

The rear part 120 may include a hot air outlet 121 for a washing machine with a drying function. The rear part 120 may also include cooling water injection openings 122 through which cooling water is supplied into the tub 115. Here, as another example, a clothes treating apparatus merely having a washing function may not include the hot air outlet 121 and the cooling water injection openings 122.

The rear part 120 may further include a plurality of coupling elements to fix the tub 115 in the cabinet.

An inner circumference of the rear surface 128 of the tub rear part 120 may be coupled to an outer circumference of a rear gasket 250. An inner circumference of the rear gasket 250 may be coupled to a tub back 130, or tub rear wall 130. The tub back 130 may include a through hole formed through its central portion such that a rotation shaft is inserted therethrough. The rear gasket 250 may be made of a material with flexibility to prevent vibration of the tub back 130 from being transferred to the rear part 120.

The rear gasket 250 may be hermetically coupled to the tub back 130 and the rear part 120 to prevent a leakage of washing water within the tub 115. The tub back 130 may be vibrated with the drum 300 when the drum 300 is rotated. Here, the tub back 130 may be spaced from the rear part 120 with a sufficient gap so as not to be interfered with the rear part 120. The rear gasket 250 may be made of a flexible material so as to allow the tub back 130 to be relatively movable without interference with the rear part 120. The rear gasket 250 may include a bellows portion which extends long enough to allow for the relative motion of the tub back 130.

The drum 300 may be accommodated in the tub and rotatably coupled to the rear side of the tub 115. The drum 300 may include ball balancers installed on front and rear portions thereof. The rear portion of the drum 300 may be connected to a spider 350, which may be connected to a rotation shaft 351. The drum 300 may be rotatable within the tub by a rotational force transferred from the rotation shaft 351. Lifts in the drum 300 are designated with reference numerals 311,312.

The rotation shaft 351 may be connected to a driving motor 500 through the tub back 130 in a direct coupling manner. In detail, the rotation shaft 351 may be connected directly to a rotor of the driving motor 500. A bearing housing 400 may be coupled to a rear surface of the tub back 130. The bearing housing 400 may rotatably support the rotation shaft 351 between the driving motor 500 and the tub back 130.

A stator of the driving motor 500 may be fixed to the bearing housing 400. The stator may be surrounded by the rotor of the driving motor 500. The driving motor 500 is a motor of an outer rotor type, and may be directly connected to the rotation shaft 351.

The bearing housing 400 may be supported by a suspension unit from a base 600 which defines a lower surface of the cabinet. The suspension unit may include supporting members connected to the bearing housing 400, and a plurality of dampers and elastic members installed between the supporting members and the base 600. The suspension unit may be formed in such a manner of symmetrically arranging from left to right the supporting member, a weight, the plurality of dampers and elastic members, based on the rotation shaft 351 of the drum 300.

The supporting members may be connected to the bearing housing 400, and connected to the tub back 130 from the rear of the tub 115 through the bearing housing 400. The supporting members may extend toward the base 600 from the rear of the tub 115. Here, the supporting members may extend toward a side of the cabinet so as to be inclined from the base 600. The supporting members which extend downward may then be bent toward the front of the cabinet and keep extending between the tub and the base 600.

The supporting members may be disposed on left and right sides in a bilaterally symmetrical form based on the rotation shaft 351 of the drum 300. The left and right supporting members may include first brackets 710a and 710b and second brackets 730a and 730b. The left supporting member and the right supporting member may be symmetrical to each other. Hereinafter, description will be given based on the left supporting member based on the rotation shaft of the drum.

The first bracket 710a may be connected to a bracket connection portion 410a of the bearing housing 400. The first bracket 710a may extend from the rear of the tub back 130 toward the base 600 in an inclining manner, and then extend between the tub and the base 600 in a bending manner. Also, the first bracket 710a may get narrower in width from its upper portion to its lower portion. That is, the upper width of the first bracket 710a may be wider than the lower width of the first bracket 710a.

The upper portion of the first bracket 710a may be provided with a plurality of coupling holes to be coupled with the bracket connection portion 410a of the bearing housing 400. The first bracket 710a may further include damper coupling portions 714 formed on an upper right side thereof and hinge-coupled with a third damper 780a to be explained later. The damper coupling portions 714 may laterally protrude from the upper right side of the first bracket 710a and has a hinge coupling holes formed therethrough.

A bent portion 713 which is a lower portion of the first bracket 710a may be connected to the second bracket 730a, which will be explained later, and coupled with a weight (or weight body) 750a. The bent portion 713 as the lower portion of the first bracket 710a may have at least four through holes for calking.

The first bracket 710a may further include side walls 711 and 712 and a pair of beads 715 for ensuring rigidity to stably support the drum 300 without being hung down. The side walls 711 and 712 formed on both ends of the first bracket 710a in a widthwise direction may increase in height from up to down of the first bracket 710a. The beads 715 may be located between the upper portion of the first bracket 710a and the bent portion 713. The pair of beads 715 may be formed in parallel to each other by extending along the longitudinal direction of the first bracket 710a. Here, the shape of the bead may not be limited to this, but may have any shape if it satisfies rigidity required.

The first bracket 710a may be molded in a pressing manner to have the side walls 711 and 712 and the beads 715. The second bracket 730a to be explained later may also be formed by the press-molding, and made of the same material as the first bracket 710a.

The second bracket 730a may extend between the tub and the base 600 from the first bracket 710a toward the front of the cabinet. The second bracket 730a may get narrower from back to front sides thereof. That is, a width of a rear end portion of the second bracket 730a, which is a portion coupled with the first bracket 710a, may be wider than a width of a front end portion of the second bracket 730a.

The rear end portion of the second bracket 730a may be connected to the bent portion 713 of the first bracket 710a in a calking manner, and the calking may be made on at least four connection points. Here, the coupling method may not be limited to this. They may also be coupled by coupling members, such as bolts and the like, or the coupling members as well as the calking manner may be used together.

The front end portion of the second bracket 730a may be elastically supported by a front elastic member 740a (see FIG. 5), and a central portion thereof may be elastically supported by a second damper 770a. Also, a first damper 760a (see FIGS. 2 and 4) may elastically support a portion between the front end portion and the central portion of the second bracket 730a. A rear end portion of the second bracket 730a may be elastically supported by a rear elastic member 720a (see FIG. 2). To this end, the second bracket 730a may further include a front spring holder 701 a (see FIGS. 2 and 5) for connecting the front elastic member 740a to the second bracket 730a, a damper holder 702a (see FIGS. 2 and 5) for connecting the first damper 760a and the second damper 770a (see FIGS. 2 and 4) to the second bracket 730a, and a rear spring holder 703a (see FIG. 7) for connecting the rear elastic member 720a to the second bracket 730a. The second bracket 730a may further include a plurality of coupling holes for bolt coupling, so as to be coupled to the front spring holder 701 a and the damper holder 702a by bolts. The rear spring holder 703a may be coupled to a lower surface of the weight 750a.

Referring to FIGS. 4 to 6, the front spring holder 701 a may include an upper portion 7011 a coupled to the front end portion of the second bracket 730a using a bolt 820a, and a lower portion 7012a coupled with the front elastic member 740a in an inserting manner. The upper portion 7011 a of the front spring holder 701 a may have a shape like a sharp "U" which comes in contact with a lower surface of the front end portion and both side wall surfaces of the second bracket 730a. The lower portion 7012a of the front spring holder 701 a may be in an approximately cylindrical shape with a cavity. Also, the lower portion 7012a of the front spring holder 701 a may have a thread on an outer surface thereof, such that the front elastic member 740a can be coupled to the lower portion 7012a of the front spring holder 701 a in an inserting manner. A stopper S may protrude from an end of the thread to block an end of the front elastic member 740a.

A pair of elastic members may elastically support both end portions of the second bracket 730a. The pair of elastic members may include the front elastic member 740a and the rear elastic member 720a. The front elastic member 740a and the rear elastic member 720a may be springs and extend upwardly with respect to the base 600. The spring used as the elastic member may have an outline similar to a ring or a pot when viewed from a side. For example, referring to FIG. 6, the spring used as the elastic member may have a shape that an end portion coupled to the lower portion 7012a of the front spring holder 701 a has a small diameter, which gradually increases as extending toward the base 600. In view of such configuration, since the diameter of the elastic member gradually increases toward the base, even when the elastic member is deformed due to vibration generated upon rotation of the drum, the lower portion 7012a of the front spring holder 701 a and the spring may not be crashed against each other, thereby preventing the generation of noise.

The elastic members may be disposed at right and left sides based on the rotation shaft of the drum 300, to elastically support the drum 300 and various components connected to the drum 300 totally at four points. In detail, the front elastic members 740a and 740b may be disposed at right and left sides, respectively, and the rear elastic members 720a and 720b may also be disposed at right and left sides, respectively.

Elastic member fixing portions 620a, 620b, 640a and 640b may protrude from the base 600, respectively, to fix the elastic members 720a, 720b, 740a and 740b to the base 600. A plurality of hinges 660a, 660b, 670a, 670b, 680a and 680b may be provided at the base 600 to connect a plurality of dampers 760a, 760b, 770a, 770b, 780a and 780b to the base 600, respectively.

The rear end portion of the second bracket 730a, as aforementioned, may be coupled to the first bracket 710a, and a lower portion of the second bracket 730a may further be coupled with the weight 750a. The rear elastic member 720a may be located between the weight 750a and the base 600 to elastically support the first bracket 710a, the second bracket 730a and the weight 750a.

The second bracket 730a may further include side walls 731 and 732 and a bead 735 which are formed to ensure rigidity for stably supporting the drum 300. The side walls 731 and 732 may be formed on both ends of the second bracket 730a in the widthwise direction. The front end portion of the second bracket 730a may be wider than the rear end portion thereof. The bead 735 which extends in the extending direction of the second bracket 730a may be formed between the front end portion and the rear end portion of the second bracket 730a. The second bracket 730a may be bent into an arcuate shape with a flat upper portion between the front end portion and the central portion, thereby forming a space for connecting the first damper 760a and the second damper 770a to the second bracket 730a. The damper holder 702a may be coupled to the lower surface of the second bracket 730a by a bolt.

The damper holder 702a may include an upper plate coupled to the lower surface of the second bracket 730a by bolts, and a damper connecting portion downwardly protruding from the upper plate and having a coupling hole for coupling with dampers by hinges. The damper connecting portion may be coupled to the first damper 760a and the second damper 770a, respectively, by hinges.

Each of weights 750a and 750b may be a concrete lump similar to a shape of an alphabet "L" which extends forwardly and upwardly in such a manner of covering the bent portion 713 of the supporting member. Here, the weight may not be limited to the concrete, but be made of any material which can provide a weight heavy enough to balance the center of mass such that the drum 300 cannot be biased. The weights may also be symmetrical to each other in right and left directions based on the rotation shaft of the drum. Hereinafter, description will be given based on the left-hand side weight.

The weight 750a may be formed into a shape of receiving a connected portion between the first bracket 710a and the second bracket 730a and covering a rear surface of the first bracket 710a and a lower surface of the second bracket 730a. Also, the weight 750a may have a surface, which comes in contact with the first and second brackets 710a and 730a, recessed to cover a part of the right side wall 712 of the first bracket 710a and a part of the right side wall 732 of the second bracket 730a. However, the weight may not be limited to this. The weight may also be attached to either the first bracket 710a or the second bracket 730a.

The weight 750a may be implemented such that its center of mass is biased toward the rear of the cabinet and an inner side of the cabinet. In detail, the weight 750a, as illustrated in FIG. 2, may be formed such that a portion thereof corresponding to the bent portion of the supporting member, namely, a portion corresponding to the connected portion between the first bracket 710a and the second bracket 730a is the thickest in up and down directions and the thickness is reduced as extending from the lower surface to the front side of the second bracket 730a. Also, the weight 750a may be formed such that a left-to-right thickness of a portion covering the right side wall 712 of the second bracket 730a is thicker than that of a portion covering the left side wall 711 of the second bracket. Such weights may balance the center of mass such that the drum 300 cannot be biased even though the clothes are introduced therein, and also function as a mass when the drum 300 is vibrated.

Referring to FIG. 7, the weight 750a may further include a through hole 751 for fixing the weight 750a by connecting the weight 750a to a rear surface 610 of the cabinet using a transit bolt 810a. The transit bolt 810a may extend from a bolt mounting portion 611, formed on the rear surface 610 of the cabinet, to the weight 750a, and have one end inserted into the through hole 751. The rear spring holder 703a for fixing the rear elastic member 720a may be fixed to a lower surface of the weight 750a by a bolt.

The rear spring holder 703a may include an upper portion having a through hole for coupling with the weight 750a by a bolt and one end bent up in correspondence with a shape of the lower surface of the weight 750a, and a lower portion having a thread on an outer surface thereof such that the rear elastic member 720a can be coupled thereto in an inserting manner. The lower potion of the rear spring holder 703a has the same shape as the lower portion of the front spring holder 701 a, so description thereof will be omitted.

FIG. 8 is a side sectional view illustrating that a first bracket 710a' and a transit bolt 810a' are coupled to the weight 750a in accordance with another exemplary embodiment. Referring to FIG. 8, the first bracket 710a' may further include a bolt coupling portion 716 having a thread on an inner surface thereof so as to be coupled with one end of the transit bolt 810a'. The transit bolt 810a' may extend from the rear surface 610 of the cabinet through the through hole 751 of the weight 750a. The transit bolt 810a' may have one end coupled to the bolt coupling portion 716 of the first bracket 710a' by a screw. The exemplary embodiment of FIG. 7 illustrates that the transit bolt 810a is coupled to the weight 750a, whereas the exemplary embodiment of FIG. 8 illustrates the transit bolt 810a' is coupled even to the first bracket 710a as well as the weight 750a, which may result in improvement of a supporting force.

A plurality of dampers may be implemented using any damper if it is able to provide a damping force by frictional resistance, which is generated as a piston is moved within a cylinder. The plurality of dampers may further include a pair of first dampers 760a and 760b for reducing vibration of the drum generated in left and right directions, a pair of second dampers 770a and 770b for reducing vibration generated when the drum is rotated, and a pair of third dampers 780a and 780b for reducing vibration of the drum generated in up and down directions.

The first dampers 760a and 760b may be located at a left side (760a) and a right side (760b) of the drum to be symmetrical to each other in right and left directions based on the rotation shaft of the drum 300. Similarly, the second dampers 770a and 770b and the third dampers 780a and 780b may also be disposed symmetrical to each other based on the rotation shaft of the drum 300. Therefore, hereinafter, description will be given based on the plurality of dampers 760a, 770a and 780a which are located at the left-hand side of the drum 300.

The first damper 760a may generally reduce the vibration of the drum 300 generated in the left and right directions. The first damper 760a may inwardly extend from the front end portion of the second bracket 730a toward the base 600 in an inclining manner and coupled to the base by the hinge 660a. The first damper 760a may be located between the front elastic member 740a and the second damper 770a. An end portion of the first damper 760a connected to the second bracket 730a may be adjacent to the front elastic member 740a.

Referring to FIGS. 2 and 4, the first damper 760a may be disposed in a widthwise direction of the drum 300. A first angle θ₁, which is an angle formed between the first damper 760a and a surface of the base 600, may be about 30°. Here, the first angle θ₁ may not be limited to this, and also be decided ranging from 30° to 60°. Also, when the third damper 780a to be explained later is further disposed, the first angle θ₁ may be decided within a range smaller than a third angle θ₃, which is formed between the third damper 780a and the surface of the base 600.

The first damper 760a may apply a damping force which is weaker than that of the second damper 770a to be explained later. For example, the first damper 760a may have a damping force of 40N. The first damper 760a may also have the same damping force as the third damper 780a when the third damper 780a is further provided.

The second damper 770a may generally reduce the vibration generated when the drum 300 is continuously rotated. The second damper 770a may backwardly extend from the central portion of the second bracket 730a toward the base 600 in the inclining manner. Also, the second damper 770a may extend along a lengthwise direction of the drum 300. Here, the second damper 770a may be disposed between the first damper 760a and the rear surface 610 of the cabinet. The rear surface 610 of the cabinet is illustrated in FIGS. 7 and 8. Referring to FIG. 2, the second damper 770a may be located between the first damper 760a and the rear elastic member 720a. In detail, an end portion of the second damper 770a, which is coupled to the second bracket 730a by the hinge, may be adjacent to the first damper 760a, and an end portion of the second damper 770a, which is coupled to the base 600 by the hinge 670a, may be adjacent to the rear elastic member 720a.

A second angle θ2, which is formed between the second damper 770a and the surface of the base 600, may be the same as the first angle θ₁. For example, the second angle θ₂ may be about 30°. The second damper 770a may have a stronger damping force than the first damper 760a. The damping force of the second damper 770a may be stronger than that of the first damper 760a in the range of 40N to 80N. For example, the second damper 770a may have a damping force of 80N. As such, since the second damper 770a has the damping force stronger than the first damper 760a, the vibration transferred to the base 600 may be remarkably reduced, and the vibration of a ball balancer may also be reduced.

The third damper 780a may further be provided in another exemplary embodiment of the present disclosure, and may generally reduce the up-and-down vibration when the drum 300 is rotated. The third damper 780a may extend from the first bracket 710a toward the base 600 in the inclining manner. An end portion of the third damper 780a, which is coupled to the base 600 by a hinge 680a, may be adjacent to the rear elastic member 720a.

The third angle θ₃, which is formed between the third damper 780a and the base 600, may be about 65°. The third damper 780a may have a damping force weaker than the second damper 770a. The damping force of the third damper 780a may also be the same as that of the first damper 760a, for example, 40N.

The foregoing embodiments and advantages are merely exemplary and are not to be construed as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A clothes treating apparatus comprising:
a cabinet;
a tub (115) fixed to the cabinet;
a drum (300) rotatably installed in the tub;
a driving unit comprising a bearing housing (400) for rotatably supporting a rotation shaft (351) connected to the drum, and a driving motor (500) for rotating the rotation shaft;
a rear gasket (250) configured to seal a rear portion of the tub (115), the rear gasket (250) having flexibility;
supporting members (710a, 730a; 710b, 730b) extending from the bearing housing (400) at a rear side of the tub (115) and extending to beneath the tub (115); and
a plurality of dampers (760a, 760b, 770a, 770b, 780a, 780b) installed between the supporting members (710a, 730a; 710b, 730b) and the lower surface of the cabinet,
wherein the plurality of dampers comprise: first dampers (760a, 760b); and second dampers (770a, 770b) disposed between the first dampers (760a, 760b) and a rear surface of the cabinet and downwardly extending from the supporting members (710a, 730a; 710b, 730b) toward the rear side of the cabinet; and
wherein the supporting members comprise:
first brackets (710a, 710b) connected to the bearing housing (400) and extending from the rear side of the tub toward the lower surface of the cabinet; and
second brackets (730a, 730b) connected to the first brackets (710a, 710b) and extending toward the front side of the cabinet,
**characterized in that**
the first dampers (760a, 760b) are inwardly extending from a front portion of the supporting members (710a, 730a; 710b, 730b) toward the lower surface of the cabinet for reducing vibration of the drum generated in left and right directions; and
wherein a pair of elastic members (720a, 740a; 720b, 740b) are disposed at both ends portion of the second brackets (730a; 730b) to support both end portions of the second brackets (730a; 730b) with respect to the lower surface of the cabinet.

2. The apparatus of claim 1, wherein the first damper (760a, 760b) has a damping force weaker than a damping force of the second damper (770a, 770b).

3. The apparatus of claim 1 or 2, wherein the plurality of dampers further comprise:
third dampers (780a, 780b) extending from a rear portion of the supporting members toward the lower surface of the cabinet.

4. The apparatus of claim 3, wherein the third damper (780a, 780b) has a damping force weaker than a damping force of the second damper (770a, 770b).

5. The apparatus according to any one of the preceding claims, further comprising weights (750a, 750b) mounted to at least one of the first brackets (710a, 710b) and the second brackets (730a, 730b).

6. The apparatus according to any one of the preceding claims, wherein the first and second brackets comprise supporting walls (711, 712; 731, 732) formed on edges thereof in a press-molding manner.

7. The apparatus according to any one of the preceding claims, wherein at least one of the first and second brackets comprises a bead (715; 735) forming along the extending direction of the bracket.

8. The apparatus according to anyone of the preceding claims, wherein the first dampers (760a, 760b) extend from the front portion of the second brackets (730a, 730b) toward the lower surface of the cabinet, and the second dampers (770a, 770b) extend from the second brackets (730a, 730b) toward the rear side of the cabinet.

9. The apparatus according to any one of the preceding claims, wherein an angle θ₁ formed between the first damper (760a, 760b) and the lower surface of the cabinet is the same as an angle θ₂ formed between the second damper (770a, 770b) and the lower surface of the cabinet.

10. The apparatus according to any one of the preceding claims, further comprising:
third dampers (780a; 780b) extending from the first brackets (710a; 710b) toward the lower surface of the cabinet.

11. The apparatus of claim 10, wherein an angle θ₃ formed between the third damper (780a; 780b) and the lower surface of the cabinet is greater than an angle (θ₁; θ₂) formed between the first damper (760a, 760b) or the second damper (770a, 770b) and the lower surface of the cabinet.

12. The apparatus according to any one of the preceding claims, wherein at least one of the plurality of dampers (760a, 760b, 770a, 770b, 780a, 780b) is installed adjacent to the elastic member (720a, 740a; 720b, 740b).

13. The apparatus according to any one of the preceding claims, wherein the tub (115) comprises an opening at a rear end portion thereof,
wherein the tub (115) comprises a tub back (130) through which a rotation shaft (351) of the drum (300) is rotatably inserted, and
wherein the rear gasket (250) hermetically seals a gap between the tub back (130) and the opening of the tub (115).

## Patentansprüche

1. Kleidungsbehandlungsvorrichtung, die Folgendes umfasst:
ein Gehäuse;
einen Bottich (115), der an dem Gehäuse befestigt ist;
eine Trommel (300), die in dem Bottich drehbar installiert ist;
eine Antriebseinheit, die ein Lagergehäuse (400) zum drehbaren Halten einer sich drehenden Welle (351), die mit der Trommel verbunden ist, und einen Antriebsmotor (500) zum Drehen der drehbaren Welle umfasst;
eine hintere Dichtung (250), die konfiguriert ist, einen hinteren Abschnitt des Bottichs (115) abzudichten, wobei die hintere Dichtung (250) eine Flexibilität aufweist;
Halteelemente (710a, 730a; 710b, 730b), die sich von dem Lagergehäuse (400) an einer Rückseite des Bottichs (115) erstrecken und sich unter den Bottich (115) erstrecken; und
mehrere Dämpfungselemente (760a, 760b, 770a, 770b, 780a, 780b), die zwischen den Halteelementen (710a, 730a; 710b, 730b) und der unteren Oberfläche des Gehäuses installiert sind;
wobei die mehreren Dämpfungselemente Folgendes umfassen: erste Dämpfungselemente (760a, 760b); und zweite Dämpfungselemente (770a, 770b), die zwischen den ersten Dämpfungselementen (760a, 760b) und einer hinteren Oberfläche des Gehäuses angeordnet sind und sich von den Halteelementen (710a, 730a; 710b, 730b) abwärts in Richtung der Rückseite des Gehäuses erstrecken; und wobei die Halteelemente Folgendes umfassen:
erste Halterungen (710a, 710b), die mit dem Lagergehäuse (400) verbunden sind und sich von der Rückseite des Bottichs in Richtung der unteren Oberfläche des Gehäuses erstrecken; und
zweite Halterungen (730a, 730b), die mit den ersten Halterungen (710a, 710b) verbunden sind und sich in Richtung der Vorderseite des Gehäuses erstrecken,
**dadurch gekennzeichnet, dass**
sich die ersten Dämpfungselemente (760a, 760b) von einem vorderen Abschnitt der Halteelemente (710a, 730a; 710b, 730b) in Richtung der unteren Oberfläche des Gehäuses zur Verringerung einer Vibration der Trommel, die in Links- und Rechtsrichtung erzeugt wird, nach innen erstrecken; und
wobei ein Paar elastischer Elemente (720a, 740a; 720b, 740b) an beiden Endabschnitten der zweiten Halterungen (730a; 730b) angeordnet sind, um beide Endabschnitte der zweiten Halterungen (730a; 730b) in Bezug auf die untere Oberfläche des Gehäuses zu unterstützen.

2. Vorrichtung nach Anspruch 1, wobei das erste Dämpfungselement (760a, 760b) eine Dämpfungskraft hat, die schwächer als eine Dämpfungskraft des zweiten Dämpfungselements (770a, 770b) ist.

3. Vorrichtung nach Anspruch 1 oder 2, wobei die mehreren Dämpfungselemente ferner Folgendes umfassen:
dritte Dämpfungselemente (780a, 780b), die sich von einem hinteren Abschnitt der Halteelemente in Richtung der unteren Oberfläche des Gehäuses erstrecken.

4. Vorrichtung nach Anspruch 3, wobei das dritte Dämpfungselement (780a, 780b) eine Dämpfungskraft hat, die schwächer als eine Dämpfungskraft des zweiten Dämpfungselements (770a, 770b) ist.

5. Vorrichtung nach einem der vorhergehenden Ansprüche, die ferner Gewichte (750a, 750b) umfasst, die wenigstens an einer der ersten Halterungen (710a, 710b) und der zweiten Halterungen (730a, 730b) angebracht sind.

6. Vorrichtung nach einem der vorhergehenden Ansprüche, wobei die ersten und zweiten Halterungen Stützwände (711, 712; 731, 732) umfassen, die an ihren Kanten über ein Pressverfahren ausgebildet werden.

7. Vorrichtung nach einem der vorhergehenden Ansprüche, wobei wenigstens eine der ersten und zweiten Halterungen eine Verstärkungsrippe (715; 735) umfasst, die längs der Ausdehnungsrichtung der Halterung ausgebildet ist.

8. Vorrichtung nach einem der vorhergehenden Ansprüche, wobei sich die ersten Dämpfungselemente (760a, 760b) von dem vorderen Abschnitt der zweiten Halterungen (730a, 730b) in Richtung der unteren Oberfläche des Gehäuses erstrecken und wobei sich die zweiten Dämpfungselemente (770a, 770b) von den zweiten Halterungen (730a, 730b) in Richtung der Rückseite des Gehäuses erstrecken.

9. Vorrichtung nach einem der vorhergehenden Ansprüche, wobei ein Winkel θ₁, der zwischen dem ersten Dämpfungselement (760a, 760b) und der unteren Oberfläche des Gehäuses ausgebildet ist, gleich einem Winkel θ₂ ist, der zwischen dem zweiten Dämpfungselement (770a, 770b) und der unteren Oberfläche des Gehäuses ausgebildet ist.

10. Vorrichtung nach einem der vorhergehenden Ansprüche, die ferner Folgendes umfasst:
dritte Dämpfungselemente (780a; 780b), die sich von den ersten Halterungen (710a; 710b) in Richtung der unteren Oberfläche des Gehäuses erstrecken.

11. Vorrichtung nach Anspruch 10, wobei ein Winkel θ₃, der zwischen dem dritten Dämpfungselement (780a; 780b) und der unteren Oberfläche des Gehäuses ausgebildet ist, größer als ein Winkel (θ₁, θ₂) ist, der zwischen dem ersten Dämpfungselement (760a, 760b) oder dem zweiten Dämpfungselement (770a, 770b) und der unteren Oberfläche des Gehäuses ausgebildet ist.

12. Vorrichtung nach einem der vorhergehenden Ansprüche, wobei wenigstens eines der mehreren Dämpfungselemente (760a, 760b, 770a, 770b, 780a, 780b) angrenzend an das elastische Element (720a, 740a; 720b, 740b) installiert ist.

13. Vorrichtung nach einem der vorhergehenden Ansprüche, wobei der Bottich (115) eine Öffnung an einem hinteren Endabschnitt umfasst,
wobei der Bottich (115) eine Bottichrückseite (130) umfasst, durch die eine drehbare Welle (351) der Trommel (300) drehbar eingesetzt ist, und
wobei die hintere Dichtung (250) einen Spalt zwischen der Bottichrückseite (130) und der Öffnung des Bottichs (115) hermetisch abdichtet.

## Revendications

1. Appareil de traitement pour vêtements, comprenant :
une carrosserie ;
une cuve (115) fixée sur la carrosserie ;
un tambour (300) installé en rotation dans la cuve ;
une unité d'entraînement comprenant un boîtier porteur (400) supporté en rotation un arbre de rotation (351) connecté au tambour, et un moteur d'entraînement (500) pour mettre l'arbre de rotation en rotation ;
un joint arrière (250) configuré pour étancher une portion arrière de la cuve (115), le joint arrière (250) ayant une flexibilité ;
des éléments de support (710a, 730a ; 710b, 730b) s'étendant depuis le boîtier porteur (400) sur un côté arrière de la cuve (115) et s'étendant jusqu'au-dessous de la cuve (115) ; et
une pluralité d'amortisseurs (760a, 760b, 770a, 770b, 780a, 781b) installés entre les éléments de support (710a, 730a ; 710b, 730b) et la surface inférieure de la carrosserie,
dans lequel la pluralité d'amortisseurs comprennent : des premiers amortisseurs (760a, 760b) ; et des seconds amortisseurs (770a, 770b) disposés entre les premiers amortisseurs (760a, 760b) et une surface arrière de la carrosserie et s'étendant vers le bas depuis les éléments de support (710a, 730a ; 710b, 730b) vers le côté arrière de la carrosserie ;
et dans lequel les éléments de support comprennent :
des premières montures (710a, 710b) connectées au boîtier porteur (400) et s'étendant depuis le côté arrière de la cuve vers la surface inférieure de la carrosserie ; et
des secondes montures (730a, 730b), connectées aux premières montures (710a, 710b) et s'étendant vers le côté avant de la carrosserie, **caractérisé en ce que**
les premiers amortisseurs (760a, 760b) s'étendent vers l'intérieur depuis une portion avant des éléments de support (710a, 730a ; 710b, 730b) en direction de la surface inférieure de la carrosserie pour réduire les vibrations du tambour générées dans les directions gauche/droite ; et
dans lequel une paire d'éléments élastiques (720a, 740a ; 720b, 740b) sont disposés aux deux portions d'extrémité des secondes montures (730a ; 730b) pour supporter les deux portions d'extrémité des secondes montures (730a ; 730b) par rapport à la surface inférieure de la carrosserie.

2. Appareil selon la revendication 1, dans lequel le premier amortisseur (760a, 760b) a une force d'amortissement plus faible qu'une force d'amortissement du second amortisseur (770a, 770b).

3. Appareil selon la revendication 1 ou 2, dans lequel la pluralité d'amortisseurs comprennent en outre :
des troisièmes amortisseurs (780a, 780b) s'étendant depuis une portion arrière des éléments de support en direction de la surface inférieure de la carrosserie.

4. Appareil selon la revendication 3, dans lequel le troisième amortisseur (780a, 780b) a une force d'amortissement plus faible qu'une force d'amortissement du second amortisseur (770a, 770b).

5. Appareil selon l'une quelconque des revendications précédentes, comprenant en outre des poids (750a, 750b) montés sur l'une au moins des premières montures (710a, 710b) et des secondes montures (730a, 730b).

6. Appareil selon l'une quelconque des revendications précédentes, dans lequel les premières et les secondes montures comprennent des parois de support (711, 712 ; 731, 732) formées sur leurs bordures d'une manière comme par moulage à la presse.

7. Appareil selon l'une quelconque des revendications précédentes, dans lequel l'une au moins des premières et des secondes montures comprend un bourrelet (715 ; 735) formé le long de la direction d'extension de la monture.

8. Appareil selon l'une quelconque des revendications précédentes, dans lequel les premiers amortisseurs (760a, 760b) s'étendent depuis la portion avant des secondes montures (730a, 730b) en direction de la surface inférieure de la carrosserie, et les seconds amortisseurs (770a, 770b) s'étendent depuis les secondes montures (730a, 730b) en direction du côté arrière de la carrosserie.

9. Appareil selon l'une quelconque des revendications précédentes, dans lequel un angle θ₁ formé entre le premier amortisseur (760a, 760b) et la surface inférieure de la carrosserie est le même qu'un angle θ₂ formé entre le second amortisseur (770a, 770b) et la surface inférieure de la carrosserie.

10. Appareil selon l'une quelconque des revendications précédentes, comprenant en outre :
des troisièmes amortisseurs (780a ; 780b) s'étendant depuis les premières montures (710a ; 710b) en direction de la surface inférieure de la carrosserie.

11. Appareil selon la revendication 10, dans lequel un angle θ₃ formé entre le troisième amortisseur (780a ; 780b) et la surface inférieure de la carrosserie est plus grand qu'un angle (θ₁ , θ₂) formé entre le premier amortisseur (760a, 760b) ou le second amortisseur (770a) et la surface inférieure de la carrosserie.

12. Appareil selon l'une quelconque des revendications précédentes, dans lequel l'un au moins de la pluralité d'amortisseurs (760a, 760b, 770a, 770b, 780a, 780b) est installé adjacent à l'élément élastique (720a, 740a ; 720b, 740b).

13. Appareil selon l'une quelconque des revendications précédentes, dans lequel la cuve (115) comprend une ouverture au niveau d'une portion d'extrémité arrière de celle-ci,
dans lequel la cuve (115) comprend un dos de cuve (130) à travers lequel un arbre rotatif (351) du tambour (300) est inséré en rotation, et dans lequel le joint arrière (250) étanche hermétiquement un intervalle entre le dos de cuve (130) et l'ouverture de la cuve (115).
